# FASCICULE DE BREVET EUROPEEN

(11) **EP 0 755 111 B1**
(45) Date de publication et mention de la délivrance du brevet: **15.03.2000**
(21) Numéro de dépôt: 96401571.3
(22) Date de dépôt: 16.07.1996
(51) Int. Cl.: H02M 3/28, H02M 3/335, B60L 9/22

(54) **Dispositif abaisseur de tension et chaîne de traction asynchrone alimentée sous réseau monophasé comportant un tel dispositif**
Spannungsabwärtswandler und denselben benutzendes, von einem Einphasennetz gespeistes, asynchrones Betriebssystem
Voltage step-down device and asynchronous traction system fed by a single-phase network using such device

(30) Priorité: 18.07.1995 FR 9508669
(43) Date de publication de la demande: 22.01.1997
(73) Titulaire: GEC ALSTHOM TRANSPORT SA, 75116 Paris (FR)
(72) Inventeur: Debruyne, Marc, 65100 Bartres (FR); Liu, Rong Fan, 64000 Pau (FR)
(74) Mandataire: Gosse, Michel

(56) Documents cités:
- US-A- 5 027 264
- PROCEEDINGS OF THE ANNUAL POWER ELECTRONICS SPECIALISTS CONFERENCE, TAIPEI, TAIWAN, JUNE 20 - 24, 1994, vol. 1, 20 Juin 1994, SOCIETY, pages 709-713, XP000492085 HIROFUMI MATSUO ET AL: "AN IMPROVED 210KVA AUXILIARY POWER SUPPLY SYSTEM OF THE ELECTRIC RAILWAY ROLLING STOCK BY USING A NEW TWO PHASE BUCK-BOOST TYPE DC-DC CONVERTER"
- IEEE TRANSACTIONS ON INDUSTRY APPLICATIONS, vol. 28, no. 6, 1 Novembre 1992, pages 1294-1301, XP000331298 KHERALUWALA M H: "PERFORMANCE CHARACTERIZATION OF A HIGH-POWER DUAL ACTIVE BRIDGE DC-TO-DC CONVERTER"

## Description

La présente invention concerne les chaînes de traction asynchrone alimentées sous réseaux monophasés, en général, et porte, plus particulièrement, sur un dispositif abaisseur de tension ainsi que sur une chaîne de traction asynchrone alimentées sous réseau monophasé comportant un tel dispositif.

Conformément à l'état de la technique connu, les chaînes de traction asynchrone alimentées sous réseau monophasé font essentiellement appel à des onduleurs de tension pilotant les moteurs de traction. C'est par exemple le cas du dispositif d'alimentation décrit dans le document "PESC'94 report page 709", qui se rapporte à un convertisseur continu-alternatif élévateur de tension. Elles font également appel à des redresseurs monophasés à commutation forcée délivrant une tension continue intermédiaire servant de source de tension aux onduleurs.

Ces chaînes de traction de l'art antérieur permettent de standardiser les bras des onduleurs ainsi que les bras des redresseurs qui ne sont dimensionnés que pour supporter la tension intermédiaire continue.

Dans certaines applications, les chaînes de traction doivent fonctionner sous plusieurs réseaux d'alimentation à la fois continue et alternative, par exemple sous tension d'alimentation de 3000V et à courant continu.

Dans de telles applications, les onduleurs et les redresseurs ne peuvent être connectés directement sur la haute tension continue. Une solution connue consiste alors à reconfigurer les bras des redresseurs de manière à obtenir un hacheur série parallèle dans le but de reconstituer, sous alimentation 3000V, la même tension continue intermédiaire qui alimentait les onduleurs traction sous alimentation monophasée.

Un des moyens pour mettre en oeuvre cette solution est l'utilisation de moyens électromécaniques permettant de commuter le schéma de puissance ainsi que l'utilisation d'inductances de lissage.

Il est parfois possible de remplacer les inductances par les enroulements secondaires du transformateur de traction monophasée.

Un inconvénient de ces solutions connues est la reconstitution de plusieurs tensions intermédiaires.

En effet, ces tensions intermédiaires ne sont pas toutes référencées au même potentiel.

A titre d'exemple, l'une des tensions intermédiaires est directement connectée à la borne positive de la tension d'alimentation. Une conséquence directe est que l'ensemble des équipements en aval de cette tension intermédiaire doit être conçu pour supporter une isolation électrique, par exemple de 3000V, par rapport à la masse, soit, selon la norme CEI, 9500V efficaces, 50Hz.

Cette contrainte de dimensionnement diélectrique amène à surdimensionner les isolants, les distances de cheminement mais également à accroître la résistance thermique des systèmes de refroidissement des semi-conducteurs.

Aussi un but de l'invention est-il un dispositif abaisseur de tension utilisé dans une chaîne de traction asynchrone alimentées sous réseau monophasé ne présentant pas les inconvéninents mentionnés ci-dessus.

L'idée fondamentale du dispositif abaisseur de tension de l'invention est de ne reconstituer qu'une seule tension continue intermédiaire.

La valeur de la tension continue intermédiaire est égale à environ la moitié de la tension d'entrée.

La tension continue intermédiaire est isolée galvaniquement ou non au réseau d'alimentation.

Conformément à l'invention, le dispositif abaisseur de tension se caractérise par au moins une paire de redresseurs monophasés à commutation forcée fonctionnant sur des enroulements secondaires d'un transformateur principal de traction, la puissance issue d'un réseau continu transitant à travers ledit transformateur principal de traction, ladite énergie étant récupérée sur un enroulement secondaire au moyen d'un redresseur monophasé à commutation forcée fonctionnant en redresseur contrôlé élévateur de tension, lesdits autres redresseurs monophasés à commutation forcée fonctionnant de façon synchrone en onduleur de tension, l'enroulement primaire dudit transformateur T principal étant en circuit ouvert.

Le dispositif abaisseur de tension de l'invention satisfait selon un premier mode de réalisation préféré à l'une au moins des caractéristiques suivantes:
- un premier et un deuxième redresseur monophasé à commutation forcée alimentent, respectivement, un premier et un deuxième enroulement secondaire d'un transformateur principal de traction, lesdits premier et deuxième redresseurs monophasés fonctionnant de façon synchrone en onduleur de tension pleine onde et alimentant, respectivement, ledit premier et ledit deuxième enroulement secondaire dudit transformateur principal de traction et un troisième redresseur monophasé à commutation forcée fonctionne en redresseur contrôlé élévateur de tension et est alimenté par ledit troisième enroulement secondaire dudit transformateur principal de traction,
- lesdits premier, deuxième et troisième enroulements secondaires du transformateur principal de traction ont le même nombre de spires.

Le dispositif abaisseur de tension de l'invention satisfait selon un autre mode de réalisation préféré à la caractéristique selon laquelle lesdits premiers et seconds redresseurs monophasés à commutation forcée de chacune desdites paires sont montées en série, chacune desdites paires étant alimentée sous une tension d'entrée, lesdits premiers redresseurs monophasés fonctionnant de façon synchrone en onduleur de tension et alimentant ledit premier enroulement secondaire dudit transformateur principal de traction qui lui est associé et lesdits seconds redresseurs monophasés à commutation forcée fonctionnent en redresseur contrôlé élévateur de tension et sont alimentés par ledit second enroulement secondaire dudit transformateur principal de traction qui lui est associé.

Le dispositif abaisseur de tension de l'invention satisfait selon l'un quelconque des modes de réalisation préféré à l'une au moins des caractéristiques suivantes:
- l'alimentation desdits premiers et deuxièmes enroulements secondaires dudit transformateur principal de traction est effectuée au moyen d'une tension carré alternative de fréquence telle que le circuit magnétique du transformateur T principal de traction ne soit pas saturé,
- lesdits redresseurs monophasés fonctionnent en redresseurs contrôlés élévateur de tension régulent leur tension continue de sortie à une valeur un peu supérieure à la moitié de la valeur de la tension d'entrée.

Enfin, conformément à une autre caractéristique, la présente invention porte sur une chaîne de traction asynchrone alimentées sous réseau monophasé comportant un dispositif abaisseur de tension tel que décrit précédemment.

Un avantage du dispositif abaisseur de tension de l'invention est de ne plus faire appel à des hacheurs série parallèle.

D'autres buts, caractéristiques et avantages de l'invention apparaîtront à la lecture de la description du mode de réalisation préféré du dispositif abaisseur de tension, description faite en liaison avec les dessins dans lesquels:
- la figure 1 représente un schéma de réalisation préférée du dispositif abaisseur de tension avec isolement galvanique conforme à l'invention,
- la figure 2 représente un schéma de réalisation préférée du dispositif abaisseur de tension sans isolement galvanique conforme à l'invention,
- la figure 3 représente une extension du dispositif abaisseur de tension représenté à la figure 2 à un dispositif abaisseur de tension comportant six redresseurs monophasés.

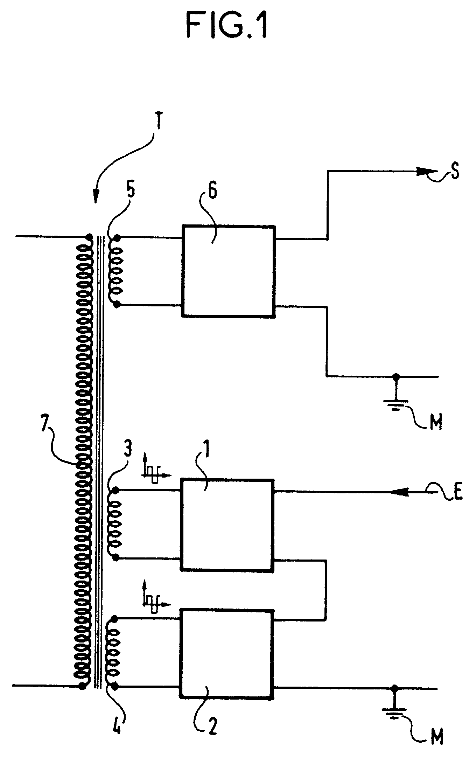

La figure 1 représente un schéma de réalisation préférée du dispositif abaisseur de tension avec isolement galvanique conforme à l'invention.

Un premier 1 et un deuxième 2 redresseur monophasé & commutation forcée sont alimentés en série sous une tension d'entrée E, par exemple de 3000V.

Le premier 1 et le deuxième 2 redresseur monophasé alimente, respectivement, un premier 3 et un deuxième 4 enroulement secondaire d'un transformateur T principal de traction.

Les premier et deuxième redresseurs monophasés fonctionnent de façon synchrone en onduleur de tension.

Les premier et deuxième redresseurs monophasés alimentent les premier et deuxième enroulements secondaires 3, 4 du transformateur principal de traction, par exemple, par une tension carré alternative, par exemple, de valeur 3000V/2, à une fréquence telle que le circuit magnétique du transformateur T principal de traction ne soit pas saturé.

Un troisième redresseur 6 monophasé à commutation forcée est alimenté par le troisième enroulement secondaire 5 du transformateur T principal de traction.

Ce troisième redresseur 6 monophasé fonctionne en redresseur contrôlé élévateur de tension selon le même principe que sous réseau monophasé et régule ainsi sa tension continue de sortie S à une valeur un peu supérieure à 3000V/2.

Le transformateur T principal comporte un enroulement primaire 7 en circuit ouvert, l'enroulement primaire est donc inutilisé.

Dans ce qui précède, il a été fait comme hypothèse que les trois enroulements secondaires du transformateur principal de traction ont le même nombre de spires, ce qui est par exemple le cas dans le domaine de la traction ferroviaire.

La tension continue intermédiaire est isolée galvaniquement et est susceptible d'être référencée à la masse M comme sous réseau monophasé.

Un dispositif de pilotage (non représenté) intégré à l'électronique de commande des premier et deuxième redresseurs monophasés a pour fonction, d'une part, d'équilibrer les tensions entre ces redresseurs monophasés et, d'autre part, de s'assurer de l'absence de courant continu dans les premier et deuxième enroulements secondaires.

Ce dispositif intégré à l'électronique de commande des premier et deuxième redresseurs monophasés est susceptible de rectifier les écarts en agissant sur le rapport cyclique de conduction des semi-conducteurs du premier et/ou du deuxième redresseur monophasé.

Le dispositif abaisseur de tension de l'invention en comportant un enroulement primaire du transformateur principal en circuit ouvert a comme avantages:
- de reconstituer une seule tension continue de sortie pouvant toujours être référencée à la masse,
- de reconstituer une seule tension avec isolation galvanique ou sans isolation galvanique,
- d'éviter l'isolement à la tension d'entrée des équipements alimentés par la tension continue et
- d'éviter d'utiliser des inductances supplémentaires de lissage comme c'est le cas dans les dispositifs de l'art antérieur.

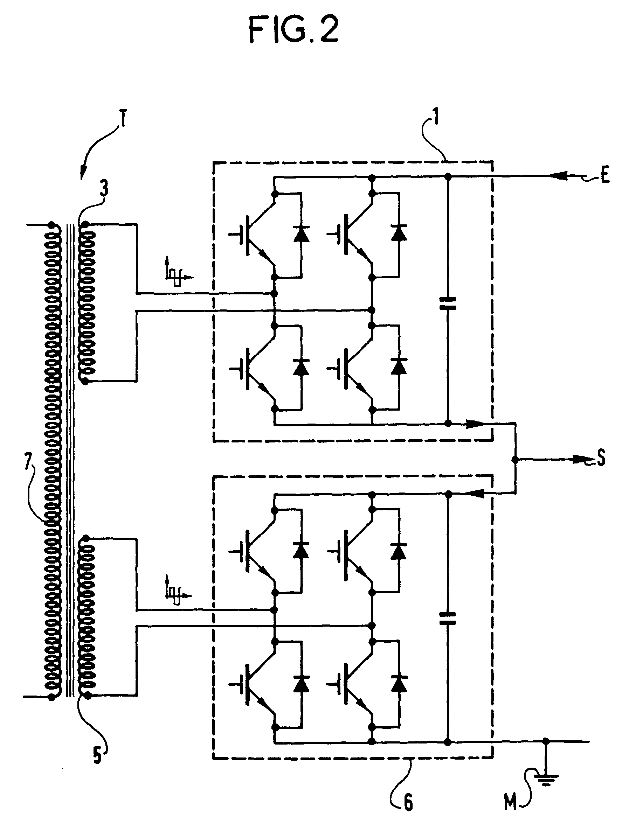

La figure 2 représente un schéma de réalisation préférée du dispositif abaisseur de tension sans isolement galvanique conforme à l'invention.

Un premier 1 et un second 6 redresseur monophasé à commutation forcée sont alimentés en série sous une tension d'entrée E, par exemple de 3000V.

Le premier redresseur monophasé 1 à commutation forcée a la même fonction que le premier redresseur monophasé décrit ci-dessus en relation avec la figure 1.

Le premier redresseur monophasé 1 alimente un premier enroulement 3 secondaire d'un transformateur T principal de traction.

Pour rappel, le premier redresseur monophasé 1 fonctionne en oscillateur et délivre une tension carré alternative, par exemple de valeur 3000V/2, au premier enroulement secondaire 3 du transformateur principal de traction.

Le second redresseur 6 monophasé à commutation forcée est alimenté par un second enroulement secondaire 5 du transformateur T principal de traction.

Ce second redresseur monophasé 6 fonctionne en redresseur contrôlé élévateur de tension selon le même principe que sous réseau monophasé et régule une tension de sortie S référencée à la masse M à une valeur, par exemple, un peu supérieure à 3000V/2.

Le transformateur T principal comporte un enroulement primaire 7 en circuit ouvert, l'enroulement primaire est donc inutilisé.

Le dispositif de pilotage (non représenté) du premier redresseur monophasé 1 a uniquement pour fonction de s'assurer de l'absence de courant continu dans le premier enroulement secondaire.

Le dispositif de pilotage (non représenté) du second redresseur monophasé 6 a pour fonction de réguler la tension de sortie S.

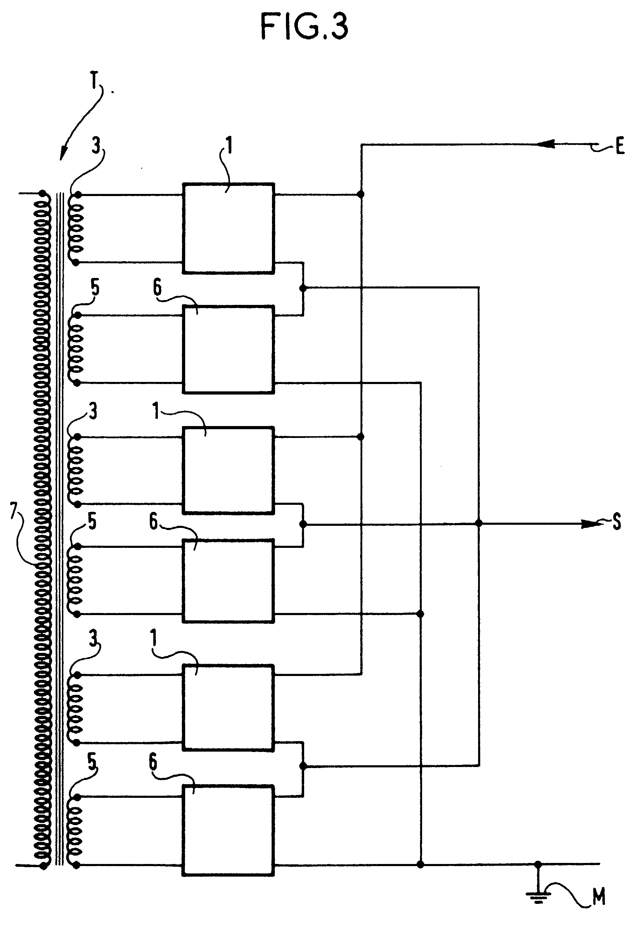

La figure 3 représente une extension du dispositif abaisseur de tension représenté à la figure 2 à un dispositif abaisseur de tension comportant six redresseurs monophasés.

On retrouve dans cette figure 3 trois paires de redresseurs monophasés 1, 6 à commutation forcée, chacune des paires de redresseurs monophasés étant alimentée sous une tension d'entrée E, par exemple de 3000V.

Chacun des premiers redresseurs monophasés 1 est associé à un premier enroulement 3 secondaire et chacun des seconds redresseurs monophasés 6 est associé à un second enroulement 5 secondaire.

Les premiers redresseurs monophasés 1 alimentent chacun un premier enroulement 3 secondaire d'un même transformateur T principal de traction.

Les seconds redresseurs monophasés 6 fonctionnent tous en redresseur contrôlé élévateur de tension et régulent tous une même tension de sortie S référencée à la masse M à une valeur, par exemple, un peu supérieure à 3000V/2.

Le transformateur T principal comporte un enroulement primaire 7 en circuit ouvert, l'enroulement primaire est donc inutilisé.

Il découle de l'un ou l'autre des modes de réalisation préférée décrits ci-dessus que le dispositif abaisseur de tension de l'invention comporte au moins une paire de redresseurs monophasés 1, 2 ou 1, 6 à commutation forcée fonctionnant sur des enroulements secondaires 3, 4 ou 3, 5 d'un transformateur T principal de traction, la puissance issue d'un réseau continu transitant à travers le transformateur T principal de traction, l'énergie étant récupérée sur un enroulement secondaire 5 au moyen d'un redresseur monophasé 6 à commutation forcée fonctionnant en redresseur contrôlé élévateur de tension, les autres redresseurs monophasés 1, 2 à commutation forcée fonctionnant de façon synchrone en onduleur de tension.

Le dispositif abaisseur de tension de l'invention trouve particulièrement application, mais non exclusivement, dans le domaine de la traction ferroviaire.

Aussi la présente invention porte sur une chaîne de traction asynchrone alimentées sous réseau monophasé comportant un dispositif abaisseur de tension tel que décrit précédemment.

## Revendications

1. Dispositif abaisseur de tension, caractérisé en ce qu'il comporte au moins deux redresseurs monophasés (1, 2, 6 ; 1, 6) à commutation forcée raccordés chacun à un enroulement secondaire (3 ,4, 5 ; 3, 5) d'un transformateur (T) principal de traction dont l'enroulement primaire (7) est en circuit ouvert, l'un au moins desdits redresseurs (1, 2 ; 1) recevant en entrée une tension continue (E) et fonctionnant en onduleur de tension, le ou les autres redresseurs monophasés (6) à commutation forcée fonctionnant en redresseur contrôlé élévateur de tension récupérant l'énergie transitant à travers le transformateur (T) et fournissant en sortie (S) une tension continue unique.

2. Dispositif selon la revendication 1, dans lequel un premier (1) et un deuxième (2) redresseur monophasé à commutation forcée fonctionnant de façon synchrone en onduleur de tension alimentent, respectivement, un premier (3) et un deuxième (4) enroulement secondaire du transformateur (T) principal de traction, un troisième redresseur (6) monophasé à commutation forcée fonctionnant en redresseur contrôlé élévateur de tension étant alimenté par un troisième enroulement (5) secondaire dudit transformateur (T).

3. Dispositif selon la revendication 2, dans lequel lesdits premiers (3), deuxième (4) et troisième (5) enroulements secondaires du transformateur (T) ont le même nombre de spires.

4. Dispositif selon la revendication 1, caractérisée en ce qu'il comporte au moins une paire de redresseurs monophasés à commutation forcée montés en série, chaque paire comportant un premier (1) et un second (6) redresseur et étant alimentée sous une tension d'entrée (E), le ou les premiers redresseurs monophasés (1) fonctionnant de façon synchrone en onduleur de tension et alimentant un premier enroulement (3) secondaire du transformateur (T) principal de traction qui lui est associé, le ou les seconds redresseurs (6) monophasés à commutation forcée fonctionnant en redresseur contrôlé élévateur de tension et étant alimentée par un second enroulement (5) secondaire dudit transformateur (T).

5. Dispositif selon l'une des revendications 2 et 4 dans lequel l'alimentation des enroulements (3, 4) alimentés par les redresseurs fonctionnant en onduleur est effectuée au moyen d'une tension carré alternative de fréquence telle que le circuit magnétique du transformateur (T) principal de traction ne soit pas saturé.

6. Dispositif selon l'une quelconque des revendications 1, 2 , 4 ou 5, dans lequel les redresseurs (6) monophasés fonctionnant en redresseurs contrôlés élévateur de tension régulent leur tension continue de sortie (S) à une valeur un peu supérieure à la moitié de la valeur de la tension d'entrée (E).

7. Chaîne de traction asynchrone alimentée par un réseau monophasé, caractérisé en ce qu'il comporte un dispositif abaisseur de tension selon l'une quelconque des revendications 1 à 6.

## Patentansprüche

1. Spannungsabwärtswandler, dadurch gekennzeichnet, dass er wenigstens zwei einphasige Gleichrichter (1, 2, 6; 1, 6) mit Zwangsumschaltung umfasst, die jeweils an eine Sekundärwicklung (3, 4, 5; 3, 5) eines Hauptantriebstransformators angeschlossen sind, dessen Primärwicklung (7) sich in offener Schaltung befindet, wobei wenigstens einer der Gleichrichter (1, 2; 1) am Eingang eine Gleichspannung (E) aufnimmt und als Wechselrichter arbeitet und der oder die anderen einphasigen Gleichrichter (6) mit Zwangsumschaltung als gesteuerter Gleichrichter-Spannungsaufwärtswandler arbeiten, der die durch den Transformator (T) fließende Energie wiedergewinnt und am Ausgang (S) eine einzige Gleichspannung liefert.

2. Vorrichtung nach Anspruch 1, bei der ein erster (1) und ein zweiter (2) einphasiger Gleichrichter mit Zwangsumschaltung, die synchron als Wechselrichter arbeiten, jeweils eine erste (3) und eine zweite (4) Sekundärwicklung des Hauptantriebstransformators (T) versorgen und ein dritter einphasiger Gleichrichter (6) mit Zwangsumschaltung, der als Gleichrichter-Spannungsaufwärtswandler arbeitet, von einer dritten Sekundärwicklung (5) des Transformators (T) versorgt wird.

3. Vorrichtung nach Anspruch 2, bei der die erste (3), zweite (4) und dritte (5) Sekundärwicklung des Transformators (T) die gleiche Zahl von Windungen haben.

4. Vorrichtung nach Anspruch 1, dadurch gekennzeichnet, dass sie wenigstens ein Paar einphasige Gleichrichter mit Zwangsumschaltung in Reihe montiert umfasst, wobei jedes Paar einen ersten (1) und einen zweiten (6) Gleichrichter umfasst und mit einer Eingangsspannung (E) versorgt wird, wobei der oder die einphasigen Gleichrichter (1) synchron als Spannungswechselrichter arbeiten und eine erste Sekundärwicklung (3) des Hauptantriebstransformators (T) versorgen, die ihnen zugeordnet ist, der oder die zweiten einphasigen Gleichrichter (6) mit Zwangsumschaltung als gesteuerter Gleichrichter-Spannungsaufwärtswandler arbeiten und von einer zweiten Sekundärwicklung (5) des Transformators (T) versorgt werden.

5. Vorrichtung nach einem der Ansprüche 2 und 4, bei der die Versorgung der von den als Wechselrichter arbeitenden Gleichrichtern versorgten Wicklungen (3, 4) mit Hilfe einer Rechteckwechselspannung mit solcher Frequenz erfolgt, dass der Magnetkreis des Hauptantriebstransformators (T) nicht gesättigt ist.

6. Vorrichtung nach einem der Ansprüche 1, 2, 4 oder 5, bei der die einphasigen Gleichrichter (6), die als gesteuerte Gleichrichter-Spannungsaufwärtswandler arbeiten, ihre Ausgangsgleichspannung (S) auf einen Wert von wenig mehr als der Hälfte des Wertes der Eingangsspannung (E) regeln.

7. Von einem einphasigen Netz versorgtes asynchrones Antriebssystem, dadurch gekennzeichnet, dass es einen Spannungsabwärtswandler nach einem der Ansprüche 1 bis 6 umfasst.

## Claims

1. Voltage lowering device characterized in that it includes at least two forced commutation single-phase rectifiers (1, 2, 6; 1, 6) each connected to a secondary winding (3, 4, 5; 3, 5) of a main traction transformer (T), the primary winding (7) of said main transformer (T) being open circuit, at least one of said rectifiers (1, 1; 1) receiving as its input a direct current voltage (E) and operating as a voltage inverter, the other forced commutation single-phase rectifier(s) (6) operating as voltage increasing controlled rectifiers recovering power passing through the transformer (T) and supplying as output (S) a single direct current voltage.

2. Device according to claim 1 characterized in that a first and a second forced commutation single-phase rectifier (1, 2) respectively supply first and second secondary windings (3, 4) of a main traction transformer (T), said first and second single-phase rectifiers operating as synchronous voltage inverters, and a third forced commutation single-phase rectifier (6) operates as a voltage increasing controlled rectifier and is supplied by a third secondary winding (5) of said transformer (T).

3. Device according to claim 2, characterized in that said first, second and third secondary windings (3, 4, 5) of the transformer (T) have the same number of turns.

4. Device according to claim 1, characterized in that it includes at least one pair of forced commutation single-phase rectifiers connected in series, each of said pairs including a first (1) and a second (2) rectifier and being supplied by an input voltage (E), said first single-phase rectifier(s) (1) operating as synchronous voltage inverters and supplying said first secondary winding (3) of the associated main traction transformer (T) and said second forced commutation single-phase rectifier(s) (6) operating as voltage increasing controlled rectifiers and being supplied by said second secondary winding (5) of the said transformer (T).

5. Device according to claim 2 or claim 4 characterized in that said windings (3, 4) supplied by the rectifiers operating as inverters are supplied by a squarewave alternating current voltage at a frequency such that the magnetic circuit of the main traction transformer (T) is not saturated.

6. Device according to any one of claims 1, 2, 4 or 5, characterized in that said single-phase rectifiers (6) operate as voltage increasing controlled rectifiers and regulate their output direct current voltage (S) to a value slightly greater than half the value of the input voltage (E).

7. Asynchronous traction system supplied by a single-phase mains power supply characterized in that it includes a voltage lowering device according to any one of claims 1 to 6.
